# EUROPEAN PATENT SPECIFICATION

(11) **EP 2 107 290 B1**
(45) Date of publication and mention of the grant of the patent: **30.11.2011**
(21) Application number: 08011990.2
(22) Date of filing: 03.07.2008
(51) Int. Cl.: F16L 11/15, F16L 58/10

(54) **Method for making a corrugated flexible metal tube having a thermally shrinking protective sheath and device for carrying out the method**
Verfahren zur Herstellung eines Metallwellschlauches mit Wärmeschrumpfschutzhülle und Vorrichtung zur Ausführung des Verfahrens
Procédé de fabrication d'un tube métallique flexible ondulé disposant d'une gaine protectrice à rétrécissement thermique et dispositif pour effectuer le procédé

(30) Priority: 04.04.2008 IT MI20080591
(43) Date of publication of application: 07.10.2009
(73) Proprietor: SARFLEX S.p.A, 08029 Siniscola (NU) (IT)
(72) Inventor: Lai, Giovanni, 08029 Siniscola (IT)
(74) Representative: Cicogna, Franco

(56) References cited:
- EP-A2- 0 835 740
- US-B1- 6 286 546

## Description

### BACKGROUND OF THE INVENTION

The present invention relates to a method for making a corrugated and extensible flexible metal tube covered by a thermally shrinking polymeric sheath.

The invention also relates to a device for carrying out the method for making such a corrugated and extensible flexible metal tube or pipe.

As is known, corrugated and extensible flexible metal tubes or pipes are conventionally broadly used as coupling fittings to connect heating or cooking implements, either for a domestic or an industrial use, to a combustible gas supplying source, and to connect sanitary fittings to hot and cold water systems.

In fact, their flexibility and elongation properties allow said tubes to be advantageously used, since they easily solve any connection problems.

Conventional corrugated flexible and extensible metal tubes or pipes are usually made of a stainless steel material, which, as is well known, is very sensible to chlorine ions.

Thus, since in operation said tubes are usually contacted by detergent materials to be used for domestic cleaning operations, which detergent materials comprise chlorine, or chlorine based compounds, they are affected by corrosion phenomena susceptible to perforate, in a short time, their walls.

To overcome the above serious drawback, prior flexible tubes have been protected by applying thereto an outer sheath made of a polymeric thermally shrinking material.

However, the application of a thermally shrinking sheath to the corrugated contour of said tubes is a very complex and difficult operation.

Actually, a prior method for providing the tubes with such a protective sheath comprises a step of applying the protective sheath on the corrugated tube outer surface by holding the tube in a tube corrugation minimum pitch condition, and thermally radially shrinking the sheath in an encompassing relationship with said tube outer surface.

Such a shrinking operation, however, affects only the outer ridges of the tube corrugations, and the protective sheath does not enter the overall depth of the adjoining corrugation grooves, due to the presence of air entrapped at the bottoms of the grooves and which air hinders a proper full thermal shrinking of the protective sheath being applied.

Thus, while the above prior method allows to protect the corrugated tube from corrosion problems, it greatly lowers the tube extension capability since the thus applied protective sheath provides poor resilient properties.

In particular, if the prior protective sheath is subjected to an axial force to extend it, it is easily broken, thereby uncovering the tube encompassed thereby and loosing its protective function.

Another prior method for applying a thermally shrinking protective sheath to a corrugated metal tube provides to subject the corrugated tube and protective sheath loosely fitted thereabout to a heating process under a pneumatic vacuum condition, in an autoclave, and then to further perform on the vacuum processed tube an end pressurizing operation in a sheath applying chamber.

This method allows to properly thermally shrink the protective sheath on the corrugated tube and to properly remove air in the grooves of the tube corrugation.

Moreover, the atmospheric pressure acting on the protective sheath upon removing the tube of the vacuum environment, facilitates a proper penetration of the protective sheath into said grooves.

However, said latter method is very complex and expensive, since it is necessary to use herein an autoclave and a pressurizing operation for pressurizing the sheath applying chamber, which pressurizing step further increase the sheath tube cost, since such a pressurizing step requires a comparatively long time.

EP0835740A2 shows a prior art method.

### SUMMARY OF THE INVENTION

Accordingly, the aim of the present invention is to provide such a method for making coated corrugated tubes, which is much more inexpensive and advantageous, from a production standpoint, than the above disclosed prior corrugated tube making methods.

Within the scope of the above aim, a main object of the invention is to provide such a method for making coated corrugated tubes, which provides sheathed corrugated tubes having very good characteristics, such as very high strength, reliability and time duration properties.

A further main object of the present invention is to provide such a method for making corrugated tubes which does not require the use of an autoclave.

The above mentioned aim and objects, as well as yet another objects, which will become more apparent hereinafter, are achieved by a method for making a corrugated flexible metal tube having a thermally shrinking protective sheath according to claim 1.

### BRIEF DESCRIPTION OF THE DRAWINGS

Further characteristics and advantages of the method and device for making corrugated flexible and extensible metal tubes having a thermally shrinking protective sheath according to the present invention will become more apparent from the following detailed disclosure of preferred embodiments thereof, which are illustrated, by way of an indicative, but not limitative, example in the accompanying drawings, where:

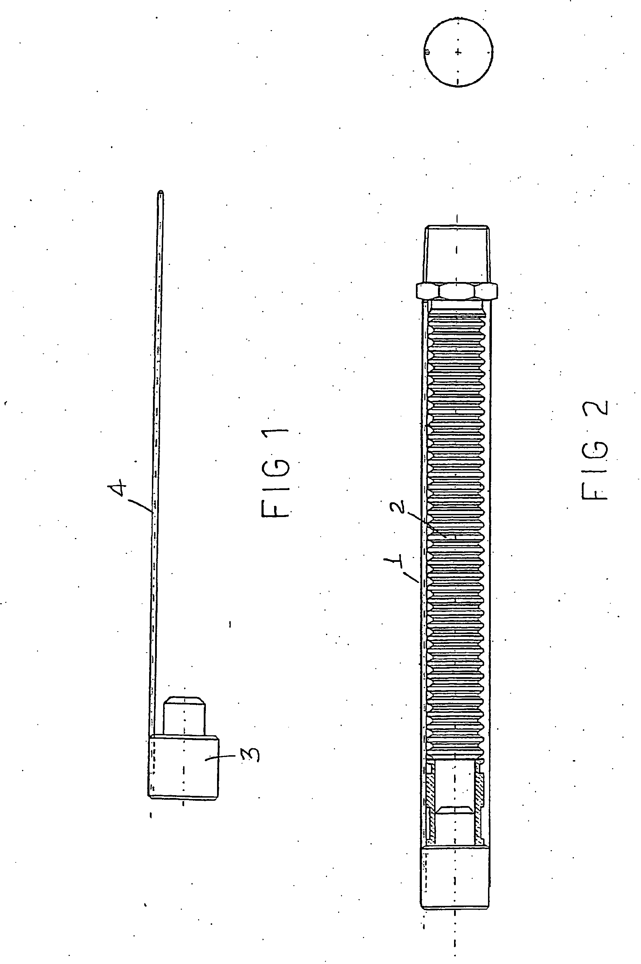

Figure 1 is a side elevation view showing a pad and bar assembly used in the method according to the invention, the bar of said assembly being provided to be engaged between a flexible tube and a protective sheath therefor, to cause the pad to simultaneously close an end portion of the thermally shrinking protective sheath;
Figure 2 is a schematic view showing the above mentioned pad, in a cross-sectional side view, after having applied said pad to an end portion of the flexible tube, thereby closing said end portion thereof;

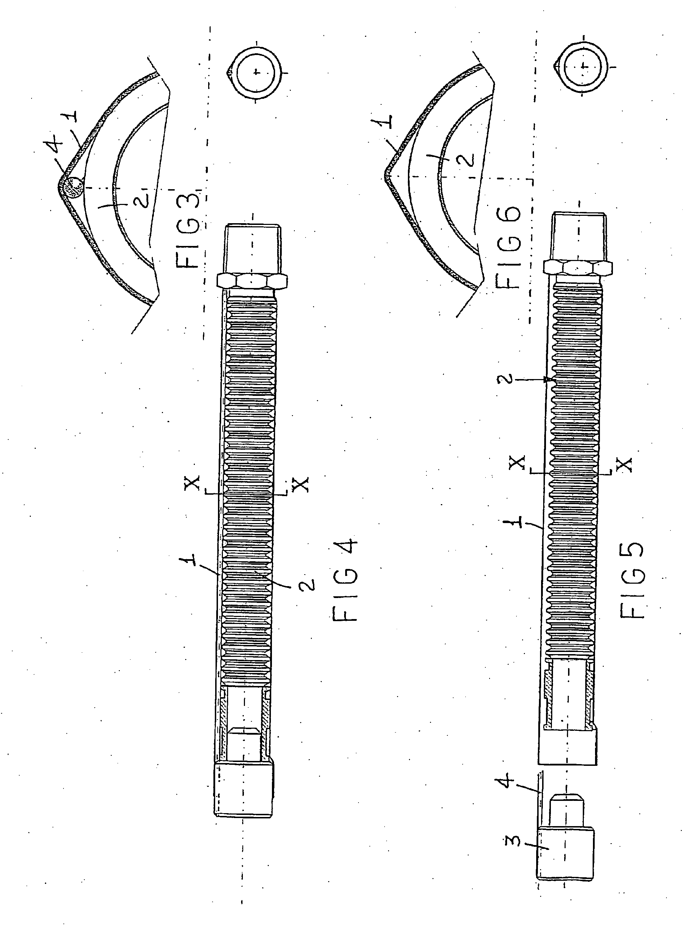

Figure 3 is a further cross-sectional view of the flexible tube and tube sheath, therethrough has been preliminarily threaded a longitudinal bar projecting from the pad element shown in figure 1;
Figure 4 is a further cross-sectioned side view showing the corrugated flexible tube thereon has been fitted or threaded a protective thermally shrinking sheath, on which has been in turn applied the pad-bar assembly, after having pre-heated by hot air the tube ;
Figure 5 is a side view showing the flexible tube and sheath applied thereto, after having performed said pre-heating step, and after having removed the pad and bar assembly;
Figure 6 shows a cross-sectioned side view, on an enlarged scale, in which the pre-heated protective sheath adheres to the flexible tube with the exception of a region of its top side end portion, thereat the pad and bar assembly was previously housed;

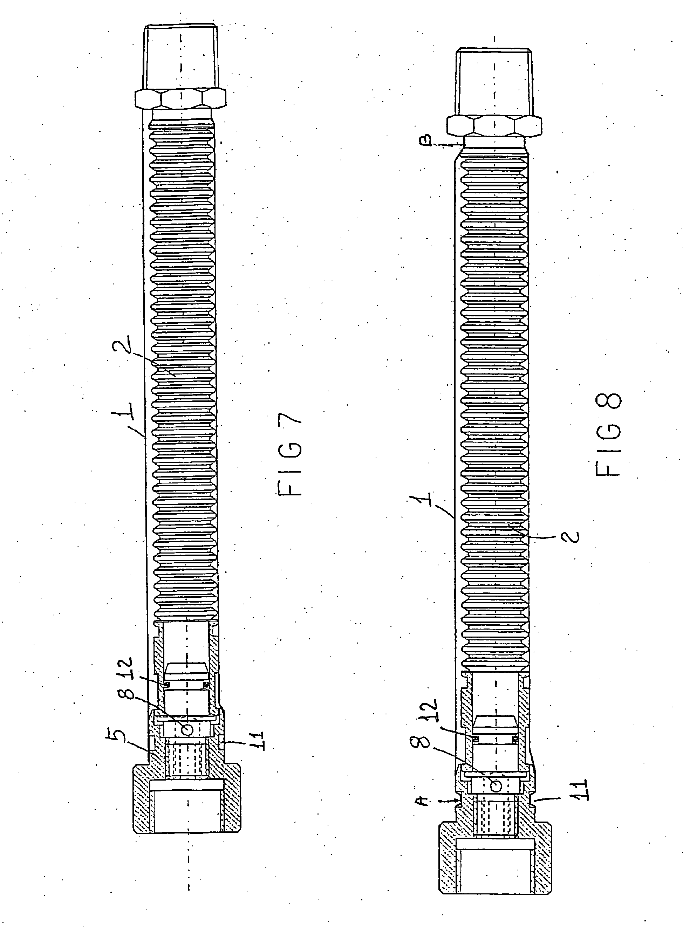

Figure 7 shows the flexible tube including its thermally shrinking sheath, to which is applied an union or fitting to be coupled to a corresponding pipe or tube of a suction device;

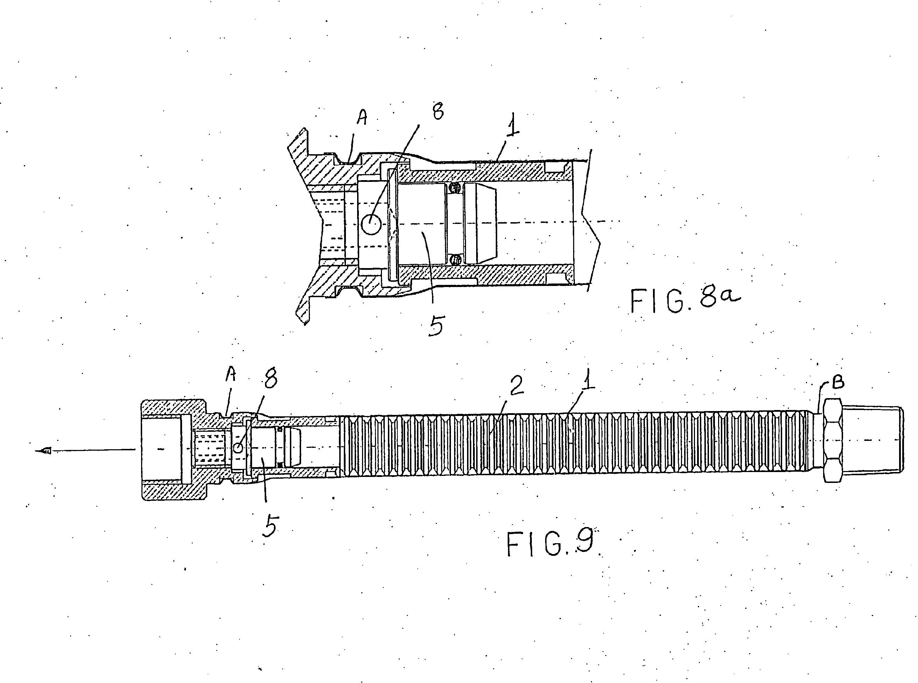

Figures 8, 8a and 9 show a fitting engaged in the flexible tube on end portions A and B of which a heating operation is carried out to facilitate the adhesion of the thermally shrinking sheath to the flexible tube body;

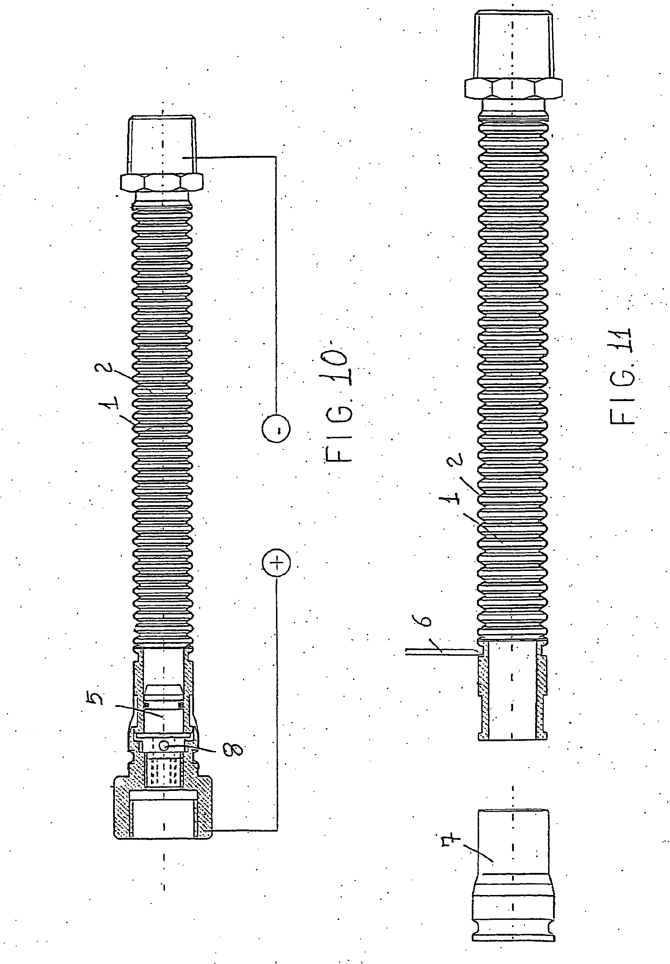

Figure 10 is a side view showing the flexible tube covered by its thermally shrinking sheath, during a heating step performed by using an electric current, preferably D.C. current so as to cause the thermally shrinking sheath to be fully shrunk, to perfectly adhere to the corrugated outer surface of the flexible tube and to an end fitting at a side of the suction union, said sheath being also adapted to be thermally shrunk, in addition to using a D.C. current source also other heating sources, such as electric resistances or hot air generators;
Figure 11 shows a further operating step in which from the sheathed tube are removed the used operating implements or tools, after having trimmed away an excess sheath portion 7;
   and

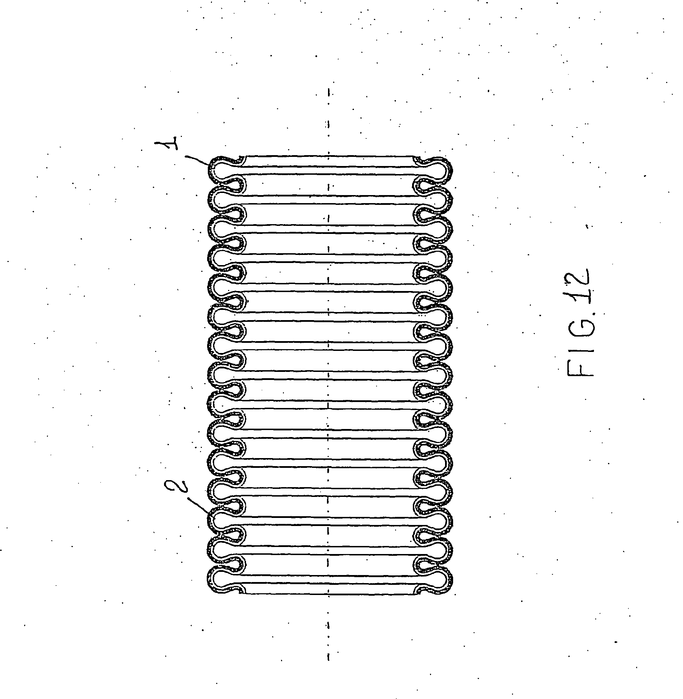

Figure 12 shows the sheathed flexible tube, being compressed to cause the tube corrugations covered by the protective sheath to contact one another.

### DESCRIPTION OF THE PREFERRED EMBODIMENTS

With reference to the number references of the figures of the accompanying drawings, the method according to the invention provides to use a very simple tool or device, which substantially comprise a pad or plug element, including a bar or rod, and designed for closing an end portion of the flexible tube, and to cause the bar to be simultaneously arranged between the flexible tube and thermally shrinking sheath thereof.

In particular, the inventive method provides to use a suction union 5 coupled, by a coupling pipe, to a suction device, not shown, and of any conventional suitable type.

Said union 5 comprises a plurality of throughgoing radial holes 8, a circular slot 11 and a gasket 12.

The above elements allow to provide a suction between the flexible tube and protective sheath therefor during a second heating step, following a first pre-heating step.

Said pre-heating and heating steps are performed at different selected times of the inventive method.

In particular, the inventive method comprises the steps of:
1- extending the flexible tube 2 to an allowable maximum length thereof, as specified by the tube technical specifications;
2-fitting a loose thermoshrinking sheath 1 on the flexible tube 2;
3-assembling a pad 3 bar 4 assembly on the flexible tube 2, to cause the bar 4 of the pad 3 to be engaged in a gap between the inside of the sheath 1 and outside of the flexible tube 2;
4-integrally preheating the thermoshrinking sheath 1 to cause said sheath to partially adhere to the flexible tube 2 and the pad 3 - bar 4 assembly;
5-removing the pad 3 and bar 4 assembly;
6-assembling the suction union 5 to the flexible tube 2 and sheath 1 assembly;
7-pre-heating the thermoshrinking sheath 1 at a region A thereof;
8-further pre-heating said thermoshrinking sheath 1 at a further region B thereof, or heating the regions A and region B;
9-sucking air between the sheath 1 and flexible tube 2 by a suction device to be coupled to the suction union 5;
10-heating the flexible tube 2 by a D.C.
   current source, or other suitable means, to cause the thermally shrinking sheath 1 to be fully shrunk so as to fully adhere to the corrugated surface of the flexible tube 2 and its end fitting at a side of the suction union 5;
11-removing from the sheathed flexible tube 2 the tools used for making it and further removing, by a suitable trimming means, the excess sheath 7;
12-pressing the sheathed flexible tube 2 so as to cause the corrugations thereof covered by said protective sheath 1 to contact one another.

In this connection it should be pointed out that, by properly choosing the inner diameter of the loose sheath 1, the method can be also carried out without using the pad 3 and bar 4 assembly.

In such a case, it is possible to omit the step of applying the pad 3 and bar 4 assembly to the flexible tube 2, so as to engage the bar 4 of the pad 3 in the gap defined between the inside of the sheath 1 and outside of the flexible tube 2.

Moreover, it is also possible to omit the heating steps as well as the pad and bar removing steps of items 3, 4 and 5 of the subject method.

It has been found that the invention fully achieves the intended aim and objects.

In fact, the invention provides a method allowing to make a flexible tube including a corrugated tube body perfectly covered and protected by a thermally shrinking sheath, without using an autoclave or the like, and with a very short making time.

In practicing the invention, the used materials, as well as the contingent size and shapes, can be any, depending on requirements.

In this connection it is to pointed out that also the pad 3, including its longitudinal bar 4, constitutes and integrating part of the present invention.

The scope of the invention also encompasses the suction union 5 including a plurality of throughgoing radial holes 8, a circular slot 11 and a gasket 12, adapted to provide a suction between the flexible tube 2 and thermally shrinking sheath 1.

Furthermore, also the sheathed corrugated tube made by the inventive method constitutes a subject matter of the present invention.

## Claims

1. A method for making a corrugated flexible and extensible metal tube (2) having a loose thermoshrinking protective sheath (1), comprising the steps of:
- providing a plurality of operating tools;
- extending said flexible tube (2) to an allowable maximum length, as specified in the tube technical specifications;
- fitting said loose thermoshrinking sheath (1) on said flexible tube (2);
- assembling a suction union (5), for coupling to a suction device on the flexible tube and sheath assembly;
- preheating the thermoshrinking sheath (1) at both its end regions (A,B); and
- removing the excess sheath and said operating tools from sheathed flexible tube.
- sucking air from in between said sheath (1) and flexible tube (2) by a suction device;
- heating said flexible tube (2) by a heating means to cause said thermally shrinking sheath (1) to be fully shrunk so as to fully adhere to a corrugated outer surface of said flexible tube (2) and to an end fitting of said flexible tube at said suction union (5);
- pressing the sheathed flexible tube (2, 1) so as to cause the flexible tube corrugations covered by the protective sheath (1) to contact one another;

2. A method according to claim 1, **characterized in that** said method, after said steps of extending or stretching the flexible tube to an allowable maximum length thereof and fitting a loose thermally shrinking sheath on said flexible tube, comprises the further steps of:
- assembling to the flexible tube a pad (3) and bar (4) assembly, to cause a bar (4) of said pad (3) and bar (4) assembly to be engaged in a gap defined between an inside of the sheath (1) and an outside surface of the flexible tube (2) with a simultaneously closure of an end portion of the flexible tube and sheath;
- integrally pre-heating the thermally shrinking sheath (1) to cause said thermally shrinking sheath to substantially fully adhere to the flexible tube (2) and to said pad-bar assembly;
- removing the pad-bar assembly, and coupling said suction union (5) to said flexible tube (2) and sheath (1).

3. A method according to claims 1 and 2, **characterized in that** said pad (3) - bar (4) assembly
is adapted to close an end portion of said corrugated flexible tube (2).

4. A method according to claim 2, **characterized in that** said method comprises the step of engaging the bar (4) of the pad (3) between the corrugated flexible metal tube (2) and the thermally shrinking protective outer sheath (1).

5. A method according to claim 1, **characterized in that** said method provides to use, in an end heating step thereof, a suction device coupled to said union (5) by a flexible tube.

6. A method according to claim 1, **characterized in that** said union (5) comprises a plurality of radial holes (8), a circular slot (11) and a gasket (12).

7. A method according to claim 1, **characterized in that** said method provides to carry out two method heating steps, respectively a preheating step and a heating step.

8. A corrugated metal tube, covered by a thermally shrinking sheath, **characterized in that** said corrugated metal tube is made by a method according to claims 1 to 7.

## Patentansprüche

1. Verfahren zur Herstellung eines flexiblen und ausziehbaren Metallwellschlauches (2) mit loser Wärmeschrumpfschutzhülle (1), folgende Schritte umfassend:
- Bereitstellen von mehreren Betriebswerkzeugen;
- Ausziehen des flexiblen Schlauches (2) auf eine zulässige Höchstlänge, wie in den technischen Daten des Schlauches angegeben;
- Anbringen der losen Wärmeschrumpfhülle (1) an dem flexiblen Schlauch (2);
- Anbauen einer Saugverbindung (5) zum Kuppeln an eine Saugvorrichtung an die Baugruppe aus flexiblem Schlauch und Hülle;
- Vorheizen der Wärmeschrumpfhülle (1) an ihren beiden Endbereichen (A, B); und
- Saugen von Luft aus dem Zwischenraum zwischen der Hülle (1) und dem flexiblen Schlauch (2) durch eine Saugvorrichtung;
- Erhitzen des flexiblen Schlauches (2) durch ein Heizmittel, um zu bewirken, dass die Wärmeschrumpfhülle (1) vollständig geschrumpft wird, sodass sie vollständig an einer gewellten Außenfläche des flexiblen Schlauches (2) und an einem Endfitting des flexiblen Schlauches an der Saugverbindung (5) anhaftet;
- Entfernen der überschüssigen Hülle und der Betriebswerkzeuge von dem umhüllten flexiblen Schlauch;
- Pressen des umhüllten flexiblen Schlauches (2, 1), um zu bewirken, dass die flexiblen Schlauchwellungen, die von der Schutzhülle (1) bedeckt sind, einander berühren.

2. Verfahren nach Anspruch 1, **dadurch gekennzeichnet, dass** das Verfahren nach den Schritten des Ausziehens oder Streckens des flexiblen Schlauches auf eine zulässige Höchstlänge davon und Anbringen einer losen Wärmeschrumpfhülle an dem flexiblen Schlauch folgende weitere Schritte umfasst:
- Anbringen an dem flexiblen Schlauch einer Baugruppe aus einem Stopfen (3) und einer Stange (4), um zu bewirken, dass eine Stange (4) der Baugruppe aus einem Stopfen (3) und einer Stange (4) in einem Spalt, der zwischen einer Innenseite der Hülle (1) und einer Außenfläche des flexiblen Schlauches (2) definiert ist, mit einem gleichzeitigen Verschluss eines Endabschnitts des flexiblen Schlauches und der Hülle in Eingriff genommen wird;
- ganzheitliches Vorheizen der Wärmeschrumpfhülle (1), um zu bewirken, dass die Wärmeschrumpfhülle im Wesentlichen vollständig an dem flexiblen Schlauch (2) und der Stopfen/Stange-Baugruppe anhaftet;
- Entfernen der Stopfen/Stange-Baugruppe und Kuppeln der Saugverbindung (5) an den flexiblen Schlauch (2) und die Hülle (1).

3. Verfahren nach einem der Ansprüche 1 oder 2, **dadurch gekennzeichnet, dass** die Baugruppe aus Stopfen (3) und Stange (4) dazu geeignet ist, einen Endabschnitt des Metallwellschlauches (2) zu verschließen.

4. Verfahren nach Anspruch 2, **dadurch gekennzeichnet, dass** das Verfahren den Schritt des Ineingriffnehmens der Stange (4) des Stopfens (3) zwischen dem flexiblen Metallwellschlauch (2) und der äußeren Wärmeschrumpfschutzhülle (1) umfasst.

5. Verfahren nach Anspruch 1, **dadurch gekennzeichnet, dass** das Verfahren das Benutzen, in einem Endheizschritt davon, einer Saugvorrichtung vorsieht, die durch einen flexiblen Schlauch an die Verbindung (5) gekuppelt ist.

6. Verfahren nach Anspruch 1, **dadurch gekennzeichnet, dass** die Verbindung (5) mehrere radiale Löcher (8), einen kreisförmigen Schlitz (11) und eine Dichtung (12) umfasst.

7. Verfahren nach Anspruch 1, **dadurch gekennzeichnet, dass** das Verfahren das Ausführen von zwei Verfahrensheizschritten, jeweils einem Vorheizschritt und einem Heizschritt, vorsieht.

8. Metallwellschlauch, der mit einer Wärmeschrumpfhülle bedeckt ist, **dadurch gekennzeichnet, dass** der Metallwellschlauch durch ein Verfahren nach Anspruch 1 bis 7 hergestellt ist.

## Revendications

1. Procédé de fabrication d'un tube métallique flexible ondulé et extensible (2) disposant d'une gaine protectrice à rétrécissement thermique (1) non serrée, comprenant les étapes consistant à :
- fournir une pluralité d'outils de manoeuvre ;
- allonger ledit tube flexible (2) jusqu'à une longueur maximum admissible, tel que spécifié dans les spécifications techniques du tube ;
- emboîter ladite gaine à rétrécissement thermique (1) non serrée sur ledit tube flexible (2) ;
- assembler un raccord d'aspiration (5), pour le couplage d'un dispositif d'aspiration sur l'ensemble tube flexible et gaine ;
- préchauffer la gaine à rétrécissement thermique (1) au niveau de ses deux régions d'extrémités (A, B) ; et
- aspirer l'air qui se trouve entre ladite gaine (1) et ledit tube flexible (2) à l'aide d'un dispositif d'aspiration ;
- chauffer ledit tube flexible (2) grâce à des moyens chauffants afin de provoquer le rétrécissement total de ladite gaine à rétrécissement thermique (1) pour qu'elle adhère totalement à une surface extérieure ondulée dudit tube flexible (2) et à un embout d'extrémité dudit tube flexible au niveau dudit raccord d'aspiration (5) ;
- retirer la gaine en excès et lesdits outils de manoeuvre dudit tube flexible gainé ;
- appuyer sur ledit tube flexible gainé (2, 1) de manière à provoquer l'entrée en contact des ondulations du tube flexible recouvertes de la gaine protectrice (1).

2. Procédé selon la revendication 1, **caractérisé en ce que** ledit procédé, après lesdites étapes d'allongement ou d'étirage du tube flexible jusqu'à une longueur maximum admissible et l'emboîtement d'une gaine à rétrécissement thermique non serrée sur ledit tube flexible, comprend les étapes suivantes, consistant à :
- assembler sur le tube flexible un ensemble tampon (3) et barrette (4) afin de provoquer l'engagement dudit ensemble tampon (3) et barrette (4) dans un interstice défini entre l'intérieur de la gaine (1) et une surface extérieure du tube flexible (2) simultanément à une fermeture d'une portion d'extrémité du tube flexible et de la gaine ;
- préchauffer intégralement la gaine à rétrécissement thermique (1) afin de provoquer l'adhésion sensiblement totale de ladite gaine à rétrécissement thermique sur le tube flexible (2) et sur ledit ensemble tampon-barrette ;
- retirer l'ensemble tampon-barrette, et coupler ledit raccord d'aspiration (5) sur ledit tube flexible (2) et ladite gaine (1).

3. Procédé selon les revendications 1 et 2, **caractérisé en ce que** ledit ensemble tampon (3) - barrette (4) est conçu pour fermer une portion d'extrémité dudit tube flexible ondulé (2).

4. Procédé selon la revendication 2, **caractérisé en ce que** ledit procédé comprend l'étape consistant à engager la barrette (4) du tampon (3) entre le tube métallique flexible ondulé (2) et la gaine protectrice extérieure à rétrécissement thermique (1).

5. Procédé selon la revendication 1, **caractérisé en ce que** ledit procédé propose d'utiliser, au cours d'une étape finale de chauffage, un dispositif d'aspiration couplé au dit raccord (5) par un tube flexible.

6. Procédé selon la revendication 1, **caractérisé en ce que** ledit raccord (5) comprend une pluralité de trous radiaux (8), une fente circulaire (11) et un joint d'étanchéité (12).

7. Procédé selon la revendication 1, **caractérisé en ce que** ledit procédé propose deux étapes de chauffage dans le procédé, respectivement une étape de préchauffage et une étape de chauffage.

8. Tube métallique ondulé recouvert d'une gaine protectrice à rétrécissement thermique, **caractérisé en ce que** ledit tube métallique ondulé est fabriqué grâce à un procédé selon les revendications 1 à 7.
